Europäisches Patentamt

European Patent Office

Office européen des brevets

(11) Numéro de publication: **0 622 255 A1**

## DEMANDE DE BREVET EUROPEEN

(21) Numéro de dépôt: **94105472.8**

(51) Int. Cl.5: **B60G 17/015**

(22) Date de dépôt: **08.04.94**

(30) Priorité: **28.04.93 FR 9305007**

(43) Date de publication de la demande:
**02.11.94 Bulletin 94/44**

(84) Etats contractants désignés:
**DE ES GB IT**

(71) Demandeur: **SIEMENS AUTOMOTIVE S.A.
Avenue du Mirail - B.P. 1149
F-31036 Toulouse Cédex (FR)**

(72) Inventeur: **Titli, André
17 rue Lannes
F-31130 Balma (FR)**
Inventeur: **Roukieh, Samir chez Ali Roukieh
Baniasse-Al-Ssahel
Rasse-Al-Nabah (SY)**

(74) Mandataire: **Fuchs, Franz-Josef, Dr.-Ing. et al
Postfach 22 13 17
D-80503 München (DE)**

(54) **Dispositif de commande d'un ensemble de suspension interposé entre une roue et la caisse d'un véhicule automobile.**

(57) Le dispositif comprend a) un premier contrôleur (5) sensible à la vitesse verticale ($V_C$) et à l'accélération verticale ($\Gamma_C$) de la caisse du véhicule pour élaborer un premier signal de commande virtuel de moyens de réglage de l'ensemble de suspension, propre à optimiser le confort du véhicule, b) un deuxième contrôleur (6) sensible à la déflexion ($D_R$) de la roue et à sa vitesse verticale ($V_R$) par rapport au sol pour élaborer un deuxième signal de commande virtuel desdits moyens de réglage, propre à optimiser le contact roue/sol, et c) des moyens de supervision (10) sensibles aux premier et deuxième signaux de commande virtuels pour élaborer un signal de commande réel appliqué aux moyens de réglage, pour régler la réponse de l'ensemble de suspension en fonction d'une stratégie de comportement prédéterminée.

FIG.:1

La présente invention est relative à un dispositif de commande d'un ensemble de suspension interposé entre une roue et la caisse d'un véhicule automobile et, plus particulièrement, à un tel dispositif muni de moyens de réglage de la réponse de l'ensemble de suspension à des excitations mécaniques transmises par les roues et/ou la caisse.

Un ensemble de suspension comprend classiquement un ressort et un amortisseur disposés en parallèle entre une masse suspendue, la caisse du véhicule, et une masse constituée par une roue équipée d'un pneumatique et son bras de suspension, excitée par des irrégularités de la surface sur laquelle circule le véhicule. Le rôle de l'amortisseur est d'absorber l'énergie stockée dans ce système de masses et d'organes élastiques pour éviter que cette énergie ne provoque des oscillations de la caisse, nuisibles au confort des passagers, et des oscillations des roues, nuisibles au contact roue/sol et donc à la sécurité desdits passagers.

Un tel ensemble présente deux fréquences de résonance situées couramment dans la bande de 1 à 2 Hz pour la caisse et dans la bande de 10 à 15 Hz pour la roue et son bras de suspension. On décrit dans la demande de brevet français No. 92 01450 déposée le 10 février 1992 par la demanderesse, un procédé de commande du coefficient d'amortissement de l'amortisseur d'un ensemble de suspension, conçu pour ne pas dégrader la capacité de filtrage de cet ensemble aux fréquences autres que les fréquences de résonance mentionnées ci-dessus. Cependant, ce procédé reste du type dans lequel on met en oeuvre une stratégie de commande unique de l'amortisseur, résultant d'un compromis entre les deux dynamiques de l'ensemble de suspension, caractérisées par les deux fréquences de résonance mentionnées ci-dessus. On ne peut alors mettre en oeuvre des stratégies de commande aussi souples que cela serait souhaitable, matérialisant un ensemble de règles telles que, par exemple, "si la vitesse du véhicule est grande, on privilégie la sécurité du véhicule".

La présente invention a donc pour but de réaliser un dispositif de commande d'un ensemble de suspension interposé entre une roue et la caisse d'un véhicule automobile, dégagé des contraintes résultant des compromis adoptés dans la technique antérieure, et permettant donc une auto-adaptation de la commande à des ensembles de règles privilégiant, en fonction des évolutions des conditions de roulage et/ou de la conduite du véhicule, soit le confort, soit la sécurité des passagers.

On atteint ce but de l'invention, ainsi que d'autres qui apparaîtront à la lecture de la description qui va suivre, avec un dispositif de commande d'au moins un ensemble de suspension interposé entre une roue et la caisse d'un véhicule automobile, muni de moyens de réglage de la réponse de l'ensemble de suspension à des excitations mécaniques transmises par la roue et/ou la caisse, ce dispositif étant remarquable en ce qu'il comprend :

a) un premier contrôleur sensible à la vitesse verticale et à l'accélération verticale de la caisse du véhicule pour élaborer un premier signal de commande virtuel desdits moyens de réglage, propre à optimiser le confort du véhicule,

b) un deuxième contrôleur sensible à la déflexion de la roue et à sa vitesse verticale par rapport au sol pour élaborer un deuxième signal de commande virtuel desdits moyens de réglage, propre à optimiser le contact roue/sol, et

c) des moyens de supervision sensibles aux premier et deuxième signaux de commande virtuels pour élaborer un signal de commande réel appliqué aux moyens de réglage pour régler la réponse de l'ensemble de suspension en fonction d'une stratégie de comportement prédéterminée.

Grâce à l'utilisation suivant l'invention de deux contrôleurs suivant chacun l'une des deux dynamiques caractérisées par les deux fréquences de résonance mentionnées ci-dessus, on échappe aux contraintes qui résultaient, dans la technique antérieure, de l'adoption d'une stratégie de commande unique impliquant l'établissement d'un compromis entre ces deux dynamiques.

Selon l'invention, encore, les moyens de supervision du dispositif comprennent des moyens d'élaboration du signal de commande réel par combinaison linéaire des premier et deuxième signaux de commande virtuels. Dans un mode de réalisation préféré du dispositif suivant l'invention, lesdits moyens de supervision comprennent des moyens de calcul des coefficients de ladite combinaison linéaire, à partir de grandeurs représentatives du comportement dynamique du véhicule.

Suivant une autre caractéristique du dispositif selon l'invention, les premier et deuxième contrôleurs sont conçus pour traiter en logique "floue" des paramètres d'entrée préalablement "fuzzyfiés". Avantageusement, les moyens de supervision sont conçus pour traiter en logique floue les signaux "fuzzyfiés" élaborés par les premier et deuxième contrôleurs. De même les moyens de calcul des coefficients de la combinaison linéaire tirant avantageusement ceux-ci de mesures de grandeurs représentatives du comportement dynamique du véhicule, après fuzzyfication préalable de celles-ci.

Grâce à l'utilisation de la logique floue, on sort des contraintes posées par le compromis classique mentionné ci-dessus, cette logique permettant en effet une autoadaptation des lois de commande d'amortissement et de raideur de l'ensemble de suspension en fonction des conditions de roulage et de conduite du véhicule. Comme on le verra plus loin, la logique floue offre encore l'avantage de permettre l'établissement aisé d'une commande "discrète" des actionneurs qui permettent d'agir sur les caractéristiques de l'ensemble de suspension (raideur, amortissement)

D'autres caractéristiques et avantages de la présente invention apparaîtront à la lecture de la description qui va suivre et à l'examen du dessin annexé dans lequel :
- la figure 1 est un diagramme fonctionnel d'un premier mode de réalisation du dispositif suivant la présente invention,
- la figure 2 est un diagramme fonctionnel d'un contrôleur incorporé au dispositif de la figure 1,
- la figure 3 représente les graphes de plusieurs fonctions d'appartenance de variables floues associées à autant de classes d'appartenance de ces variables, utilisés pour la "fuzzyfication" de grandeurs d'entrée traitées dans des contrôleurs "flous" incorporables au dispositif de la figure 1,
- les figures 4 et 5 sont des tableaux matérialisant des ensembles de règles caractéristiques mise en oeuvre par un contrôleur flou de "sécurité" et un contrôleur flou de "confort" respectivement, utilisables dans le dispositif de la figure 1,
- la figure 6 est un graphe illustrant la "défuzzyfication" de la sortie d'un "superviseur" formant partie du dispositif de la figure 1, pour élaborer un signal de commande d'un actionneur agissant sur les caractéristiques de raideur et/ou d'amortissement d'un ensemble de suspension commandé par le dispositif suivant l'invention,
- la figure 7 est un diagramme fonctionnel d'un deuxième mode de réalisation du dispositif suivant la présente invention,
- la figure 8 est un diagramme fonctionnel d'un superviseur "flou" incorporé au dispositif de la figure 7, et
- la figure 9 représente une fonction d'appartenance utilisable dans le superviseur de la figure 8.

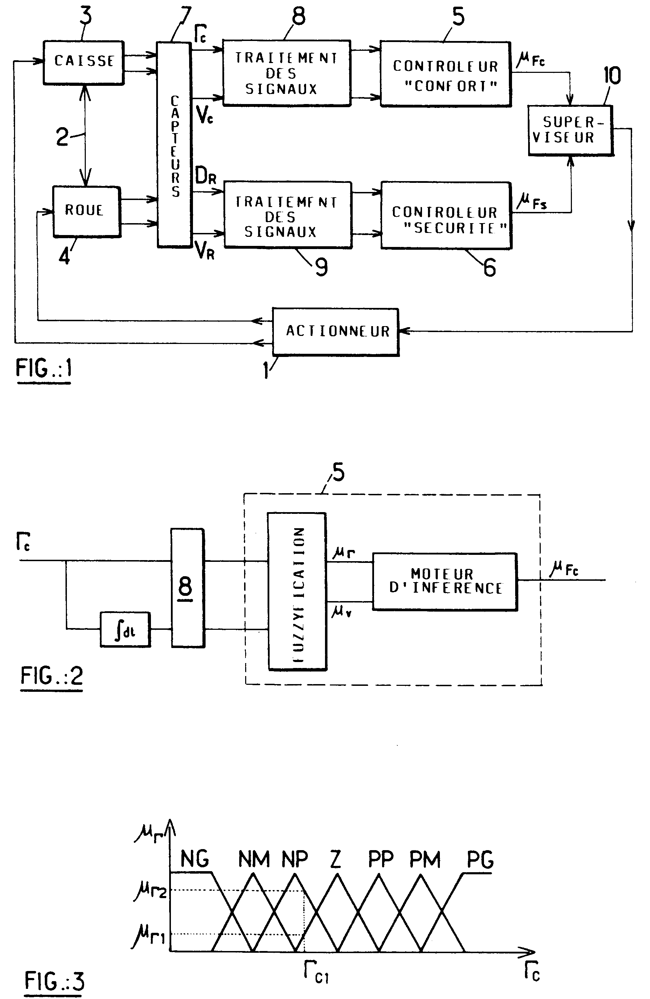

On se réfère à la figure 1 du dessin annexé où il apparaît que le dispositif suivant l'invention est conçu pour commander un actionneur 1 tel qu'un amortisseur formant partie d'un ensemble de suspension, schématisé par la double flèche 2, interposé entre la caisse 3 et une roue 4 d'un véhicule automobile par exemple. On connaît de tels amortisseurs munis de moyens de réglage de leur coefficient d'amortissement, par variation d'une section d'étranglement d'un passage de fluide faisant communiquer deux chambres de fluide séparées par un piston mobile dans un cylindre, le piston et le cylindre étant mécaniquement couplés à la caisse et la roue, respectivement, ou inversement. Le dispositif suivant l'invention a donc pour but d'élaborer un signal de commande de ces moyens de réglage. Bien entendu l'invention n'est pas limitée à cette application donnée seulement à titre d'exemple. Ainsi on pourrait faire varier les caractéristiques mécaniques de l'ensemble de suspension en agissant sur la raideur d'un ressort monté classiquement en parallèle sur l'amortisseur, plutôt que sur le coefficient d'amortissement de cet amortisseur. En variante encore, on pourrait agir à la fois sur la raideur du ressort et sur le coefficient d'amortissement de l'amortisseur.

Selon une caractéristique importante du dispositif suivant l'invention, le signal de commande "réel" de l'actionneur 1 est élaboré à partir de signaux de commande "virtuels" fournis par des premier et deuxième moyens de commande dits "contrôleurs" 5 et 6 respectivement, alimentés par des signaux représentatifs du comportement dynamique de la caisse et de la roue, respectivement.

C'est ainsi qu'on choisit pour représenter le comportement dynamique de la caisse, son accélération verticale $\Gamma_C$ et sa vitesse verticale $V_C$. On conçoit que ces grandeurs sont bien représentatives des mouvements verticaux de la caisse, et donc du comportement dynamique de celle-ci qui détermine le confort des passages présents dans le véhicule. Ce comportement dynamique est caractérisé par une fréquence de résonance de l'ordre de 1 à 2 Hz, écartée d'un ordre de grandeur de celle de la roue (environ 10 à 15 Hz), comme on l'a vu en préambule de la présente description. C'est pourquoi, suivant la présente invention, on utilise deux contrôleurs spécialisés distincts, élaborant chacun des ordres de commande "virtuels" prenant en compte l'un des deux comportements dynamiques seulement, ces ordres de commande étant ensuite combinés pour élaborer un signal de commande réel de l'actionneur 1, favorisant soit le confort soit la sécurité des passagers. On dispose ainsi de beaucoup de souplesse dans le choix des stratégies de commande, comme on le verra plus loin.

Le dispositif suivant l'invention comprend donc, outre le contrôleur 5 de "confort", un contrôleur 6 de "sécurité" sensible au comportement dynamique de la roue par rapport au sol, la permanence d'un contact roue/sol sans glissement étant essentielle au maintien de la directivité du véhicule, comme il est bien connu. Suivant l'invention, on choisit pour représenter le comportement dynamique de la roue, la composante verticale $V_R$ de sa vitesse et la distance de son axe par rapport au sol, que l'on peut atteindre par la déflexion $D_R$ du pneumatique qui l'équipe.

EP 0 622 255 A1

Ainsi le dispositif suivant l'invention comprend un groupe 7 de capteurs de types connus délivrant des signaux représentatifs des grandeurs $\Gamma_C$, $V_C$, $V_R$, $D_R$, les paires de signaux $\Gamma_C$, $V_C$ et $V_R$, $D_R$ étant mises en forme et filtrées dans des blocs de traitement de signaux classiques 8 et 9 respectivement, avant d'être délivrées aux contrôleurs 5 et 6 respectivement. $D_R$ est tiré d'un capteur de distance, a ultrasons par exemple, ou d'un calcul mettant en oeuvre les accélérations verticales de la caisse et de la roue.

Le dispositif suivant l'invention comprend encore des moyens de supervision 10, appelés dans la suite "superviseur", sensibles aux premier et deuxièmes signaux de commande virtuels produits par les contrôleurs 5 et 6 respectivement pour élaborer un signal de commande réel appliqué aux moyens de réglage de l'actionneur 1, de manière à régler la réponse de l'ensemble de suspension en fonction d'une stratégie de comportement prédéterminée.

Suivant l'invention encore, le signal de commande réel résulte d'une combinaison linéaire des signaux de sortie des contrôleurs 5 et 6, mise en oeuvre par le superviseur. On pondère ainsi l'influence relative des signaux de commande virtuels sur le signal de commande réel final, de manière à mettre en oeuvre telle ou telle stratégie de commande choisie, favorisant par exemple le renforcement de la sécurité des passagers au détriment de leur confort, ou inversement.

Pour ce faire, l'invention propose de tirer parti des caractéristiques avantageuses particulières à la logique "floue", à savoir sa capacité à mettre en oeuvre des jeux de règles de comportement résultant de l'expérience de l'homme de métier, sans que ces règles exigent une formalisation mathématique des relations liant les divers paramètres représentatifs du comportement dynamique de l'ensemble de suspension à commander. C'est ainsi que, par exemple, on pourra mettre en oeuvre une règle telle que "plus la vitesse du véhicule est grande, plus la commande de l'ensemble de suspension tend à renforcer la sécurité des passagers", ce qui revient à accroître l'influence de la sortie du contrôleur 6 sur la commande des moyens de réglage de l'actionneur 1.

On va illustrer maintenant ce qui précède en décrivant la structure et le fonctionnement d'un des contrôleurs 5,6, le fonctionnement de l'autre étant basé sur les mêmes principes. C'est ainsi qu'on a représenté à la figure 2 un diagramme fonctionnel du contrôleur 5 de "confort", dit aussi contrôleur "lent" du fait que la dynamique de la caisse 3 qu'il contrôle est caractérisée par une fréquence de résonance d'un ordre de grandeur inférieure à celle de la dynamique de la roue 4.

Ayant mesuré à l'aide d'un accéléromètre l'accélération $\Gamma_C$ de caisse, on peut en tirer par intégration la vitesse $V_C$ correspondante. Après traitement en 8, les signaux sont saisis par le contrôleur 5 qui procède d'abord à leur "fuzzyfication". Pour ce faire, la valeur instantanée d'une grandeur variable $\Gamma_C$ ou $V_C$ est convertie en un jeu de "degrés d'appartenance" à des "classes d'appartenance" définies par des "fonctions d'appartenance" représentées sur le graphe de la figure 3. A titre d'exemple, on a illustré à cette figure la fuzzyfication de la variable $\Gamma_C$, accélération de la caisse, étant entendu que les fuzzyfications des autres variables évoquées ci-dessus, $V_C$, $D_R$, $V_R$ s'opèrent de la même façon et n'exigent pas de description particulière.

La fuzzification implique une division de l'intervalle de variation de la variable $\Gamma_C$ ou "univers du discours" suivant la terminologie de la logique floue, en plusieurs classes d'appartenance NG, NM, NP, ZE, PP, PM, PG qui peuvent se recouvrir partiellement comme représenté à la figure. C'est ainsi que les classes NG (négatif grand), NM (négatif moyen), NP (négatif petit), ZE (zéro), PP (positif petit), PM (positif moyen), et PG (positive grand) couvrent avec chevauchement des sous-intervalles consécutifs de l'intervalle de variation de $\Gamma_C$. Dans chaque classe d'appartenance, on définit une fonction d'appartenance, triangulaire, symétrique et centrée sur chaque domaine comme représenté, ou présentant toute autre forme convenable bien connue en logique floue, chaque fonction variant entre 0 et 1. C'est ainsi qu'une valeur instantanée $\Gamma_{C1}$ de la variable $\Gamma_C$ est convertie en une variable floue présentant un degré d'appartenance $\mu_{\Gamma 1}$ à la classe ZE et $\mu_{\Gamma 2}$ à la classe NP.

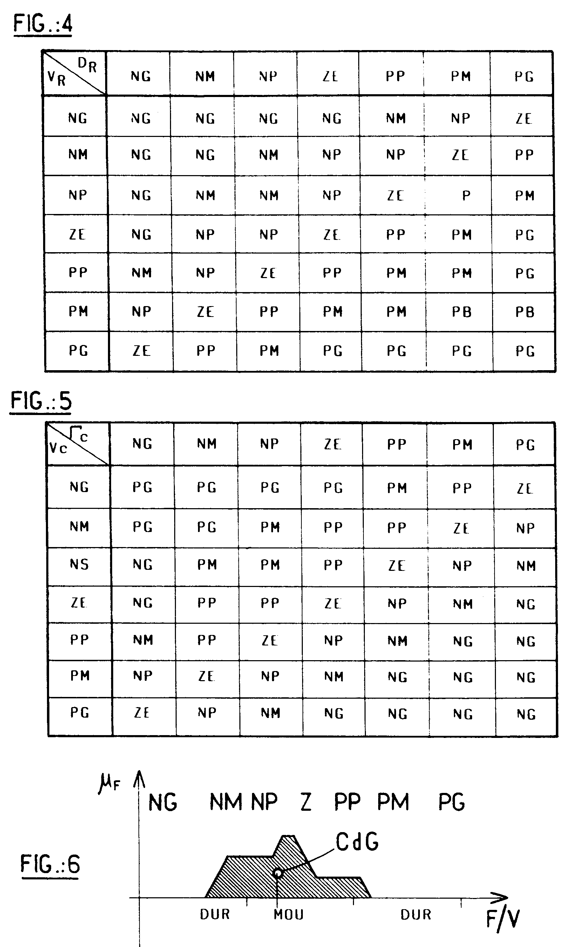

Après fuzzyfication des variables $\Gamma_C$ et $V_C$, il est possible de leur appliquer un ensemble de règles, telles que celle mentionnée ci-dessus concernant le renforcement de la sécurité du véhicule quand la vitesse de celui-ci s'accroît, résultant de l'expérience de l'homme de métier. Cet ensemble de règles est matérialisé par le tableau de la figure 5, à double entrée de variables $\Gamma_C$, $V_C$ "fuzzyfiées". C'est ainsi que dans la mesure du degré d'appartenance de la variable $\Gamma_C$ à la classe NP et de la variable $V_C$ à la classe ZE, le tableau indique que le signal de sortie, fuzzyfié, du contrôleur 5 appartient à la classe PP (positif petit). Le signal de sortie du contrôleur 5 prend ainsi la forme d'un "vecteur" $\mu_{FC}$ constitué des deux degrés d'appartenance de la variable floue $F_C$ de sortie du contrôleur aux classes d'appartenance définies dans le tableau de la figure 5 par les deux couples de classes d'appartenance des variables d'entrée $\Gamma_C$ et $V_C$.

Le contrôleur de sécurité 6 présente une structure et un fonctionnement analogue et délivre de même un vecteur $\mu_{FS}$ tiré d'un ensemble de règles matérialisé par le tableau de la figure 4.

Les vecteurs ainsi formés sont délivrés au superviseur 10 qui a pour fonction d'en déduire un vecteur de commande approprié $\mu_F$ de l'actionneur 1, en combinant lesdits vecteurs. Suivant une stratégie particulièrement simple, la combinaison est de la forme :

$$\mu_F = \alpha.\mu_{FC} + \beta.\mu_{FS}$$

avec $\alpha + \beta = 1$.

Si l'on veut favoriser le confort des passagers, on renforce le coefficient $\alpha$ aux dépens du coefficient $\beta$ en choisissant par exemple :

$\alpha = 0,6$
$\beta = 0,4$

Pour une voiture de sport roulant à vitesse élevée, on renforce l'influence du contrôleur de sécurité 6 pour accroître la "tenue de route" en choisissant par exemple :

$\alpha = 0,3$
$\beta = 0,7$

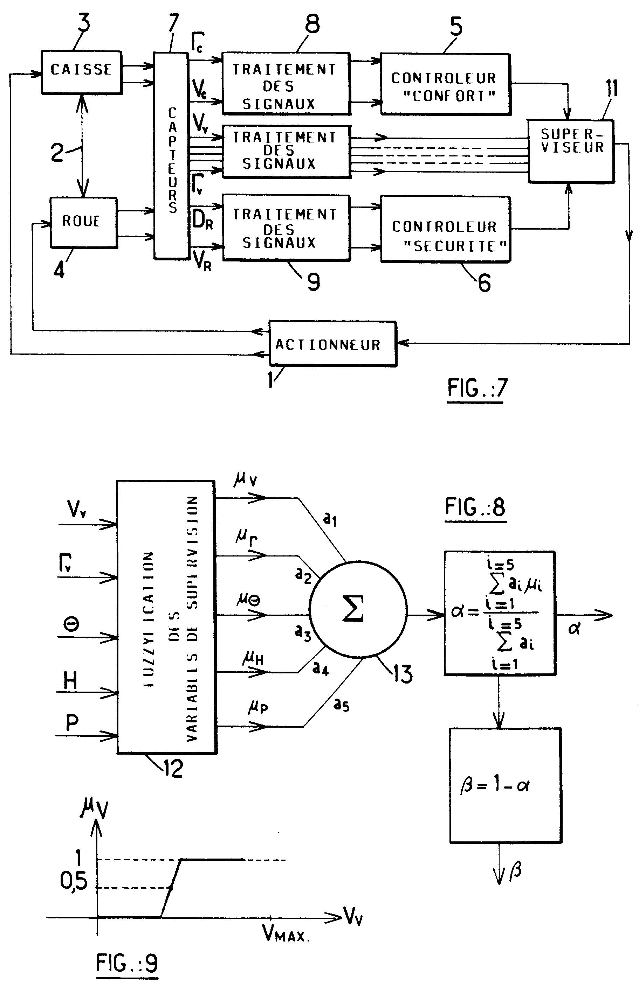

Le vecteur flou $\mu_F$ ainsi obtenu et défini sur l'univers de discours couvert par les classes d'appartenance NG à PG, doit être "défuzzyfié" pour que le superviseur produise un signal déterminé, propre à commander des moyens de réglage du coefficient d'amortissement d'un amortisseur, par exemple, constitué par un piston coulissant dans un cylindre où il délimite deux chambres pour un fluide qui peut passer d'une chambre dans l'autre par un conduit équipé de moyens de réglage d'une restriction. Le coefficient d'amortissement correspond au rapport de l'effort F supporté par l'amortisseur à la vitesse relative V du piston dans le cylindre, le graphe de la fonction F(V) constituant la "caractéristique" de l'amortisseur. Cette caractéristique comprend couramment une partie centrale droite centrée sur l'origine des coordonnées et de pente caractérisant le coefficient d'amortissement de l'amortisseur et deux parties droites de pente plus faible, prolongeant les deux extrémités de la partie centrale. Un amortisseur typique réglable peut présenter au moins deux caractéristiques F(V) se distinguant essentiellement par la pente de la partie centrale. Quand celle-ci est faible l'amortisseur est qualifié de "mou" alors que lorsque cette pente est forte, l'amortisseur est qualifié de "dur", suivant la terminologie utilisée sur l'axe F/V de la figure 6.

Sur cette figure, on a illustré aussi un procédé classique de "défuzzyfication" du vecteur $\mu_F$, défini sur un univers de discours constitué des classes d'appartenance NG à PG repérées sur un axe parallèle à l'axe F/V. Ce procédé consiste, à titre d'exemple, à écrêter les fonctions d'appartenance de F à la valeur de leur degré d'appartenance à la classe d'appartenance associée et à déterminer le centre de gravité CdG de l'aire (hachurée à la figure 6) délimitée entre les fonctions d'appartenance écrêtées et l'axe d'ordonnée nulle du graphe de ces fonctions. L'abscisse du centre de gravité tombe forcément dans l'une des trois zones repérées "dur", "mou", "dur", ce qui définit précisément la caractéristique de l'amortisseur que doit établir le dispositif de commande suivant l'invention.

On a représenté à la figure 7 un deuxième mode de réalisation du dispositif suivant l'invention, qui comprend un superviseur 11 développant une stratégie de commande plus fine que celui de la figure 1. Sur ces deux figures, des références numériques identiques repèrent des éléments ou organes identiques ou similaires.

C'est ainsi que le superviseur 11 du dispositif de la figure 1 prend en compte des données relatives au comportement de l'ensemble du véhicule, telles que la vitesse $V_V$ et l'accélération $\Gamma_V$ du véhicule, l'angle de direction $\theta$ des roues avant du véhicule, la hauteur H de la caisse du véhicule, la pression P du liquide de freinage, etc..., comme cela apparaît sur le diagramme fonctionnel du superviseur 11 représenté à la figure 8.

Il s'agit là de variables qui, lorsqu'elles s'approchent de leur limite supérieure, exigent un renforcement de la sécurité du véhicule, donc une commande de l'actionneur de l'ensemble de suspension sous l'influence prépondérante du contrôleur 6 de "sécurité", commande qui "durcit" alors la suspension aux dépens du confort des passagers, de manière à renforcer la tenue de route du véhicule.

On tient compte de ce souci de sécurité dans la fuzzyfication de ces variables (en 12, figure 8) en adoptant pour celles-ci des fonctions d'appartenance ayant l'allure de celle représentée à la figure 9, utilisée pour la fuzzyfication de la vitesse du véhicule $V_V$. Pour cette fuzzyfication, on va considérer que l'étendue des valeurs pouvant être prises par la variable considérée ("univers du discours") peut être divisée en deux classes d'appartenance complémentaires dites "confort" et "sécurité". Sur la figure 9, on a représenté la fonction d'appartenance de la variable $V_V$ à la classe "sécurité". Elle permet de déduire le degré d'appartenance $\mu_v$ de la variable $V_V$ à la classe "sécurité", le degré d'appartenance à la classe "confort" s'en déduisant par complémentation à 1.

Suivant l'invention, on tire des degrés d'appartenance $\mu_i$ des variables fuzzyfiées ($\mu_i = \mu_V, \mu_\Gamma, \mu_\theta, \mu_H, \mu_P$) et de coefficients pondérateurs $a_i$ attachés à chaque degré d'appartenance, des valeurs des coefficients $\alpha$ et $\beta$ définis ci-dessus en liaison avec la description du dispositif de la figure 1, pour combiner les sorties $\mu_{FC}$ et $\mu_{FS}$ des contrôleurs 5 et 6. C'est ainsi que l'on choisit :

$$\beta = \frac{\Sigma a_i \mu_i}{\Sigma a_i}$$

$\alpha = 1 - \beta$

$\beta$ étant calculé dans un sommateur-pondérateur 13 formant partie du superviseur 11. Celui-ci calcule enfin l'ordre de commande $\mu_F = \alpha.\mu_{FC} + \beta.\mu_{FS}$ de l'actionneur 1, comme décrit précédemment.

On remarquera que ce dispositif s'adapte avantageusement à de nombreux types de capteurs et d'actionneurs par un simple changement des tables de fuzzyfication des mesures fournies par les capteurs, ou de la table de conversion de la valeur floue de commande $\mu_F$ résultante en un signal de commande réel de l'actionneur. On pourra donc remplacer un actionneur du type amortisseur a deux positions discrètes, tel que celui décrit en liaison avec la figure 6, par un actionneur à variation continue du coefficient d'amortissement, par exemple, ou même par un actionneur de nature différente, tel qu'un ressort à raideur variable.

Il résulte de ce qui précède que seuls les contrôleurs 5 et 6 sont attachés à un ensemble de suspension particulier, c'est-à-dire à une roue du véhicule et à la portion de caisse correspondante. Diverses architectures du dispositif suivant l'invention sont alors possibles, en particulier celle dans laquelle on utilise un calculateur superviseur unique pour les quatre ensembles de suspension d'un véhicule automobile classique à quatre roues. En variante, le superviseur peut être adapté pour calculer des jeux de coefficients ($\alpha,\beta$) différents pour chaque ensemble de suspension, en fonction de la position de celui-ci (avant-droit, avant-gauche, arrière-droit, arrière-gauche) par le biais de coefficient de pondération $a_i$ des variables globales du véhicule, particuliers à chaque ensemble de suspension. Les coefficients de pondération sécurité/confort associés à chaque ensemble sont alors fournis à des sommateurs élémentaires particuliers à chaque ensemble.

Bien entendu l'invention n'est pas limitée aux modes de réalisation décrits et représentés qui n'ont été donnés qu'à titre d'exemple. En particulier, on peut intégrer les divers calculateurs (contrôleurs, superviseurs) de tous les ensembles de suspension, dans une même unité physique, pour permettre ainsi un partage des ressources physiques communes telles que microprocesseurs, mémoires et composants associés d'autant que, comme on l'a vu en préambule de la présente description, les fréquences des phénomènes à contrôler sont différentes.

## Revendications

**1.** Dispositif de commande d'au moins un ensemble de suspension interposé entre une roue et la caisse d'un véhicule automobile, muni de moyens de réglage de la réponse de l'ensemble de suspension à des excitations mécaniques transmises par la roue et/ou la caisse, caractérisé en ce qu'il comprend :
a) un premier contrôleur (5) sensible à la vitesse verticale ($V_C$)et à l'accélération verticale ($\Gamma_C$) de la caisse du véhicule pour élaborer un premier signal de commande virtuel desdits moyens de réglage, propre a optimiser le confort du véhicule,
b) un deuxième contrôleur (6) sensible à la déflexion ($D_R$) de la roue et à sa vitesse verticale ($V_R$) par rapport au sol pour élaborer un deuxième signal de commande virtuel desdits moyens de réglage, propre à optimiser le contact roue/sol, et
c) des moyens de supervision (10;11) sensibles aux premier et deuxième signaux de commande virtuels pour élaborer un signal de commande réel appliqué aux moyens de réglage pour régler la réponse de l'ensemble de suspension en fonction d'une stratégie de comportement prédéterminée.

**2.** Dispositif conforme à la revendication 1, caractérisé en ce que lesdits moyens de supervision comprennent des moyens d'élaboration du signal de commande réel par combinaison linéaire des premier et deuxième signaux de commande virtuels.

EP 0 622 255 A1

**3.** Dispositif conforme à la revendication 2, caractérisé en ce que lesdits moyens de supervision comprennent des moyens de calcul des coefficients $(\alpha,\beta)$ de ladite combinaison linéaire, à partir de grandeurs $(V_V,\Gamma_V, \theta,H,P)$ représentatives du comportement dynamique du véhicule.

**4.** Dispositif conforme à l'une quelconque des revendications 1 à 3, caractérisé en ce que les premier (5) et deuxième (6) contrôleurs sont conçus pour traiter en logique "floue" des paramètres d'entrée $(V_C,\Gamma_C;D_R,V_R)$ préalablement "fuzzifiés".

**5.** Dispositif conforme à la revendication 4, caractérisé en ce que les moyens de supervision (10;11) sont conçus pour traiter en logique floue les signaux fuzzifiés élaborés par les premier (5) et deuxième (6) contrôleurs.

**6.** Dispositif conforme à l'ensemble des revendications 3 et 5, caractérisé en ce que les moyens de calcul des coefficients $(\alpha,\beta)$ opèrent sur les grandeurs $(V_V,\Gamma_V,\theta,H,P)$ représentatives du comportement dynamique du véhicule, après fuzzyfication préalable de celles-ci.

**7.** Dispositif conforme à l'une quelconque des revendications 4 à 6, caractérisé en ce que le premier signal de commande virtuel est tiré d'un ensemble de règles défini par le tableau suivant :

| $V_C$ \ $\Gamma_C$ | NG | NM | NP | ZE | PP | PM | PG |
|---|---|---|---|---|---|---|---|
| NG | PG | PG | PG | PG | PM | PP | ZE |
| NM | PG | PG | PM | PP | PP | ZE | NP |
| NS | NG | PM | PM | PP | ZE | NP | NM |
| ZE | NG | PP | PP | ZE | NP | NM | NG |
| PP | NM | PP | ZE | NP | NM | NG | NG |
| PM | NP | ZE | NP | NM | NG | NG | NG |
| PG | ZE | NP | NM | NG | NG | NG | NG |

et par des fonctions d'appartenance prédéterminées des variables $(V_C,\Gamma_C)$ à des classes d'appartenance (NG à PG) respectives, les valeurs instantanées des variables $(V_C,\Gamma_C)$ déterminant les règles de ce tableau qui conditionnent l'appartenance du premier signal de commande virtuel à une ou plusieurs classes d'appartenance (NG à PG).

**8.** Dispositif conforme à l'une quelconque des revendications 4 à 7, caractérisé en ce que le deuxième signal de commande virtuel est tiré d'un ensemble de règles défini par le tableau suivant :

| $V_R$ \ $D_R$ | NG | NM | NP | ZE | PP | PM | PG |
|---|---|---|---|---|---|---|---|
| NG | NG | NG | NG | NG | NM | NP | ZE |
| NM | NG | NG | NM | NP | NP | ZE | PP |
| NP | NG | NM | NM | NP | ZE | P | PM |
| ZE | NG | NP | NP | ZE | PP | PM | PG |
| PP | NM | NP | ZE | PP | PM | PM | PG |
| PM | NP | ZE | PP | PM | PM | PB | PB |
| PG | ZE | PP | PM | PG | PG | PG | PG |

et par des fonctions d'appartenance prédéterminée des variables ($D_R$,$V_R$) à des classes d'appartenance (NG à PG) respectives, les valeurs instantanées des variables ($D_R$,$V_R$) déterminant les règles de ce tableau qui conditionnent l'appartenance du deuxième signal de commande virtuel à une ou plusieurs classes d'appartenance (NG à PG).

9. Dispositif conforme à l'une quelconque des revendications 1 à 8, associé à plusieurs ensembles de suspension d'autant de roues d'un véhicule, caractérisé en ce que les moyens de supervision associés à tous les ensembles de suspension sont réunis matériellement dans un calculateur unique.

10. Dispositif conforme à la revendication 9, prise dans sa dépendance de la revendication 3, caractérisé en ce que le calculateur exécute un traitement roue par roue des grandeurs prises en compte pour calculer les coefficients ($\alpha$,$\beta$) de la combinaison linéaire des premier et deuxième signaux de commande virtuels, un sommateur local effectuant ladite combinaison.

FIG.:1

FIG.:2

FIG.:3

## FIG.:4

| $V_R$ \ $D_R$ | NG | NM | NP | ZE | PP | PM | PG |
|---|---|---|---|---|---|---|---|
| NG | NG | NG | NG | NG | NM | NP | ZE |
| NM | NG | NG | NM | NP | NP | ZE | PP |
| NP | NG | NM | NM | NP | ZE | P | PM |
| ZE | NG | NP | NP | ZE | PP | PM | PG |
| PP | NM | NP | ZE | PP | PM | PM | PG |
| PM | NP | ZE | PP | PM | PM | PB | PB |
| PG | ZE | PP | PM | PG | PG | PG | PG |

## FIG.:5

| $V_c$ \ $\Gamma_c$ | NG | NM | NP | ZE | PP | PM | PG |
|---|---|---|---|---|---|---|---|
| NG | PG | PG | PG | PG | PM | PP | ZE |
| NM | PG | PG | PM | PP | PP | ZE | NP |
| NS | NG | PM | PM | PP | ZE | NP | NM |
| ZE | NG | PP | PP | ZE | NP | NM | NG |
| PP | NM | PP | ZE | NP | NM | NG | NG |
| PM | NP | ZE | NP | NM | NG | NG | NG |
| PG | ZE | NP | NM | NG | NG | NG | NG |

FIG.:6

10

FIG.:7

FIG.:8

$$\alpha = \frac{\sum\limits_{i=1}^{i=5} a_i \mu_i}{\sum\limits_{i=1}^{i=5} a_i}$$

$$\beta = 1 - \alpha$$

FIG.:9

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.5) |
|---|---|---|---|
| X | 2ND IEEE INT. CONF. ON FUZZY SYSTEMS, vol.1, 28 Mars 1993, SAN FRANSISCO, CALIFORNIA, USA pages 512 - 515 PETERS, L.; BECK, K.; CAMPOSANO, R. 'ADAPTIVE FUZZY CONTROLLER IMPROVES COMFORT' | 1 | B60G17/015 |
| A | * le document en entier * | 2,4,5 | |
| A | EP-A-0 385 723 (MITSUBISHI DENKI K.K.) * le document en entier * | 1,8 | |
| A | WO-A-91 08120 (FRED TEVES) * abrégé; revendications 1-6; figures 1-4 * <br> * page 1 - page 5, alinéa 2 * | 1 | |
| A | WO-A-91 17069 (ALFRED TEVES) * abrégé; revendications 1-3,5; figures 1,3,4 * * page 2, alinéa 3 - page 4, alinéa 2 * | 1 | |
| | | | DOMAINES TECHNIQUES RECHERCHES (Int.Cl.5) |
| A | PATENT ABSTRACTS OF JAPAN vol. 11, no. 205 (M-603) 3 Juillet 1987 & JP-A-62 023 805 (HITACHI) * abrégé * | 1,2,4 | B60G |
| A | PATENT ABSTRACTS OF JAPAN vol. 14, no. 379 (M-1012) (4322) 16 Août 1990 & JP-A-02 141 320 (MITSUBISHI ELECTRIC) * abrégé * | 1,2,4 | |
| A | PATENT ABSTRACTS OF JAPAN vol. 15, no. 28 (M-1072) 23 Janvier 1991 & JP-A-02 270 619 (MITSUBISHI ELECTRIC) * abrégé * | 1,4 | |
| | -/-- | | |

Le présent rapport a été établi pour toutes les revendications

| Lieu de la recherche | Date d'achèvement de la recherche | Examinateur |
|---|---|---|
| LA HAYE | 8 Août 1994 | Tsitsilonis, L |

Office européen
des brevets

# RAPPORT DE RECHERCHE EUROPEENNE

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.5) |
|---|---|---|---|
| A | PATENT ABSTRACTS OF JAPAN vol. 16, no. 69 (M-1212) 20 Février 1992 & JP-A-03 258 650 (TOYOTA MOTOR) * abrégé * | 1,3,6 | |
| P,A | EP-A-0 563 845 (TOYOTA) * le document en entier * | 1,4,7 | |

DOMAINES TECHNIQUES RECHERCHES (Int.Cl.5)

Le présent rapport a été établi pour toutes les revendications

| Lieu de la recherche | Date d'achèvement de la recherche | Examinateur |
|---|---|---|
| LA HAYE | 8 Août 1994 | Tsitsilonis, L |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)